# EUROPEAN PATENT APPLICATION

(11) **EP 4 796 768 A1**
(43) Date of publication of application: **26.08.2026**
(21) Application number: 26159392.5
(22) Date of filing: 18.02.2026
(51) Int. Cl.: F01N 3/20, F02M 26/15, F01N 13/00, F02B 37/18, F02M 26/06

(54) **ENGINE ASSEMBLY PROVIDING EXHAUST SYSTEM**

(30) Priority: 19.02.2025 GB 202502407
(71) Applicant: Perkins Engines Company Limited, Peterborough, Cambridgeshire PE1 5FQ (GB)
(72) Inventor: NOVAC, Claudiu Gabriel, Peterborough, PE1 5FQ (GB); ALDRED, Mark Philip, Peterborough, PE1 5FQ (GB)
(74) Representative: Boult Wade Tennant LLP

(57) **Abstract**

Engine assembly comprising:
a combustion chamber (110);
a first aftertreatment unit (150) configured to receive a first portion of exhaust gas from the combustion chamber, the first aftertreatment unit (150) comprising an exhaust fluid mixing conduit configured to facilitate mixing of exhaust gas with an exhaust fluid to produce exhaust gas mixed with exhaust fluid;
a second aftertreatment unit (160) configured to receive the exhaust gas mixed with exhaust fluid from the first aftertreatment unit (150), the second aftertreatment unit comprising a selective catalytic reduction unit;
a bypass conduit (250) having an inlet configured to receive a second portion of exhaust gas from the combustion chamber, and an outlet configured to supply the second portion of exhaust gas to a bypass re-entry point of the engine assembly located upstream of the second aftertreatment unit;
and a thermal transfer region (290) between the bypass conduit (250) and the first aftertreatment unit (150) to facilitate thermal transfer between the bypass conduit and the first aftertreatment unit. Optionally the bypass conduit (250) can supply the second portion of exhaust gas into an exhaust gas recirculation unit (170).

## Description

### Field of the disclosure

The disclosure relates to the field of internal combustion engine systems. In particular, this disclosure relates to an engine assembly comprising a bypass conduit.

### Background

When burning fuel, such as diesel, petrol, and/or alternative fuels such as hydrogen, internal combustion engines output various substances. In some circumstances, it may be desirable to process one or more of the output substances. This processing may assist in meeting current and future emissions legislation. Most commonly those substances comprise hydrocarbons (HC), carbon monoxide (CO), mono-nitrogen oxides (NOₓ) and particulate matter, such as carbon (C), a constituent of soot. The emission of some of those substances may be reduced by careful control of the operating conditions of the engine, but usually it is necessary to provide an engine aftertreatment system downstream of the engine to process at least some of those output substances.

For example, it is known to reduce or eliminate mono-nitrogen oxides (NO_{X}) in diesel combustion emissions by conversion to diatomic nitrogen (N₂) and water (H₂O) by catalytic reaction with chemicals such as ammonia (NH₃) entrained in the exhaust fluid. Generally, ammonia is not present in exhaust gases and must therefore be introduced upstream of a catalyst, typically by injecting an exhaust fluid, for example a reductant such as a urea solution, into the exhaust gas which decomposes into ammonia at sufficiently high temperatures. By this method, exhaust gases can be treated, meaning that a proportion of the substances which would otherwise be released to atmosphere are instead converted to nitrogen (N₂) and water (H₂O).

The efficiency of converting the substances is affected by various factors, including a temperature of the aftertreatment system. It is known to increase the temperature of the aftertreatment system in order to increase a performance of the aftertreatment system. For example, components of the aftertreatment system may have an operating temperature which it is desirable to reach as quickly as possible following startup of the internal combustion engine. Improved techniques for controlling the temperature of the aftertreatment system are therefore desirable for reducing emissions.

### Summary of the disclosure

Against this background, there is provided: an engine assembly comprising:
a combustion chamber;
a first aftertreatment unit configured to receive a first portion of exhaust gas from the combustion chamber, the first aftertreatment unit comprising an exhaust fluid mixing conduit configured to facilitate mixing of exhaust gas with an exhaust fluid to produce exhaust gas mixed with exhaust fluid; and
a second aftertreatment unit configured to receive the exhaust gas mixed with exhaust fluid from the first aftertreatment unit, the second aftertreatment unit comprising a selective catalytic reduction unit;
a bypass conduit having an inlet configured to receive a second portion of exhaust gas from the combustion chamber, and an outlet configured to supply the second portion of exhaust gas to a bypass re-entry point of the engine assembly located upstream of the second aftertreatment unit; and
a thermal transfer region between the bypass conduit and the first aftertreatment unit to facilitate thermal transfer between the bypass conduit and the first aftertreatment unit.

In this way, thermal energy may be provided from the bypass conduit to the first aftertreatment system via the thermal transfer region, thereby increasing an efficiency of the first aftertreatment system. In particular, the exhaust gas in the bypass conduit avoids intermediate components in which thermal energy may be lost and therefore more of the total thermal energy produced in the combustion chamber arrives at the first aftertreatment system than would be the case if all of the exhaust gas were to travel via the components intermediate the combustion chamber to the first aftertreatment system. By increasing the temperature of the first aftertreatment system more rapidly, the exhaust fluid within the first aftertreatment system is less likely to form solid deposits and films. Additionally, since the bypass re-entry point is upstream of the second aftertreatment unit, the second portion of exhaust gas is treated at least by the second aftertreatment system. By treating the second portion of exhaust gas with the second aftertreatment system, an overall efficiency of conversion of exhaust gas is increased further.

Summarising, using the engine assembly as set out above, it is possible to efficiently control the distribution of thermal energy such that thermal energy from the exhaust gas can be repurposed. In this way, the efficiency of the aftertreatment systems of the engine assembly at lower temperatures (e.g. immediately following ignition of the engine) is improved.

### Brief description of the drawings

Embodiments of the disclosure will now be described, by way of example only, with reference to the accompanying drawings in which:
- Figure 1 shows an engine assembly in accordance with the prior art;
- Figure 2 shows a first embodiment of an engine assembly in accordance with the disclosure;
- Figure 3 shows a second embodiment of an engine assembly in accordance with the disclosure;
- Figure 4 shows a third embodiment of an engine assembly in accordance with the disclosure;
- Figure 5 shows a fourth embodiment of an engine assembly in accordance with the disclosure;
- Figure 6 shows a fifth embodiment of an engine assembly in accordance with the disclosure;
- Figure 7 shows a sixth embodiment of an engine assembly in accordance with the disclosure;
- Figure 8 shows a seventh embodiment of an engine assembly in accordance with the disclosure; and
- Figure 9 shows an eighth embodiment of an engine assembly in accordance with the disclosure.

### Detailed description

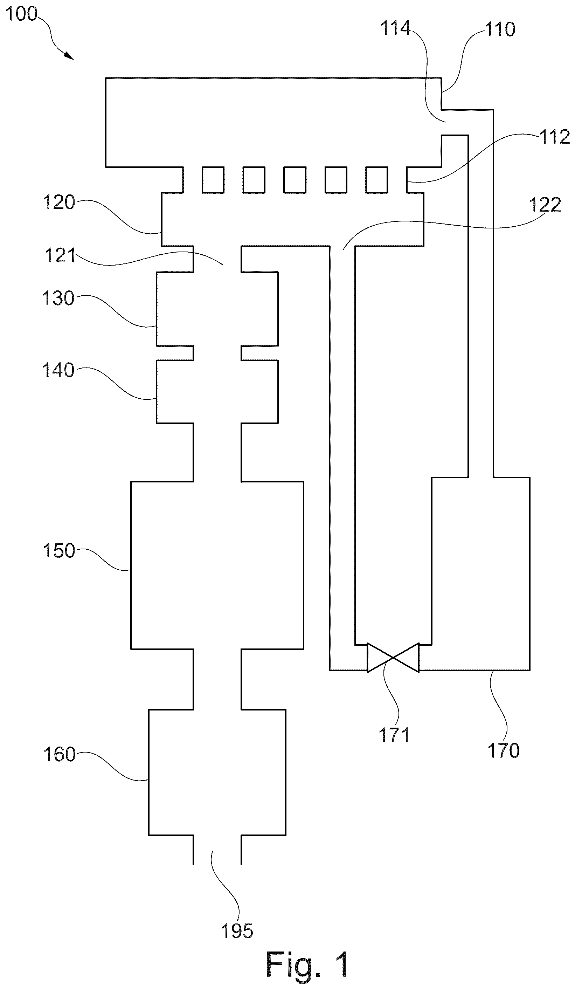

Figure 1 shows an engine assembly 100 in accordance with the prior art.

The engine assembly 100 comprises a combustion chamber 110. Within the combustion chamber, fuel (e.g. petrol, diesel, hydrogen, an alternative fuel, and/or any other combustible fuel) may burn, which in turn produces exhaust gas.

As shown in Figure 1, the combustion chamber may comprise one or more cylinders 112 in which the fuel may burn. The exhaust gas, produced within the one or more cylinders 112, may be output via respective outlets of the one or more cylinders 112 to an exhaust gas manifold 120. The exhaust gas manifold 120 is configured to receive exhaust gas from the combustion chamber 110.

The engine assembly 100 further comprises a first aftertreatment unit 150. The first aftertreatment unit 150 comprises an exhaust fluid mixing conduit configured to facilitate mixing of exhaust gas with an exhaust fluid to produce exhaust gas mixed with exhaust fluid. The first aftertreatment unit 150 may be downstream of the combustion chamber 110. As such, the first aftertreatment unit 150 may be configured to treat the exhaust gas produced by the combustion chamber 110. As shown in Figure 1, the first aftertreatment system 150 is configured to receive a first portion of exhaust gas from the combustion chamber 110. For this purpose, the exhaust gas manifold 120 comprises a primary outlet 121 configured to supply the first aftertreatment unit 150. As shown in Figure 1, the primary outlet 121 is configured to supply the first aftertreatment unit 150 via a turbocharger 130 and via a backpressure valve 140. In some arrangements (not shown in Figure 1), the engine assembly 100 may not comprise a turbocharger 130 and/or the engine assembly 100 may not comprise a backpressure valve 140. As such, the primary outlet 121 may be configured to supply the first aftertreatment unit 150 directly.

As shown in Figure 1, the turbocharger 130 may be between the combustion chamber 110 and the first aftertreatment unit 150. The turbocharger 130 may be configured to receive the exhaust gas flow from the combustion chamber 110. The turbocharger 130 may be configured to compress exhaust gas supplied by the outlet 121 and re-supply compressed exhaust gas to the combustion chamber 110. How the compressed exhaust gas is re-supplied to the combustion chamber 110 by the turbocharger 130 is not shown in Figure 1.

In the arrangement shown in Figure 1, the turbocharger 130 is between the exhaust gas manifold 120 (which is downstream of the combustion chamber 110), and the backpressure valve 140 (which is upstream of the first aftertreatment unit 150). As shown in Figure 1, the backpressure valve 140 may be between the turbocharger 130 and the first aftertreatment unit 150. The backpressure valve 140 may be configured to maintain a constant pressure within the combustion chamber 110. For example, the backpressure valve 140 may be closed to increase a pressure within the combustion chamber 110, and the back pressure valve 140 may be opened to decrease the pressure within the combustion chamber 110. Therefore, by opening and closing the backpressure valve 140, the constant pressure within the combustion chamber 110 may be maintained.

The engine assembly 100 further comprises a second aftertreatment unit 160. The second aftertreatment unit comprises a selective catalytic reduction unit (not shown separately). As shown in Figure 1, the second aftertreatment unit is configured to receive exhaust gas from the first aftertreatment unit 150. Since the first aftertreatment unit 150 comprises the exhaust fluid mixing conduit, the second aftertreatment unit 160 is configured to receive, from the first aftertreatment unit 150, exhaust gas mixed with exhaust fluid. As such, the second aftertreatment unit 160 may facilitate catalysis of the exhaust gas mixed with exhaust fluid such that a proportion of the substances which would otherwise be released to atmosphere are instead converted to nitrogen (N₂) and water (H₂O). An engine assembly outlet 195 may be provided downstream of the second aftertreatment unit 160 to release the exhaust gas which has passed through the first and second aftertreatment units 150, 160.

In some arrangements (e.g. as shown in Figure 1), the first aftertreatment system 150 comprises the exhaust fluid mixing conduit (not shown separately) and the second aftertreatment system 160 comprises the selective catalytic reduction unit. **In** alternative arrangements (not shown in Figure 1), the exhaust fluid mixing conduit of the first aftertreatment system 150 may comprise a first exhaust fluid mixing conduit and the second aftertreatment system 160 may comprise a second exhaust fluid mixing conduit. The second exhaust fluid mixing conduit may be similar to the first exhaust fluid mixing conduit. Additionally, or alternatively, the selective catalytic reduction unit of the second aftertreatment unit 160 may comprise a first selective catalytic reduction unit. The first aftertreatment unit 160 may further comprise a second selective catalytic reduction unit. The second selective catalytic reduction unit may be similar to the first selective catalytic reduction unit. In this way, the efficiency of the treatment of the exhaust gas may be increased since the exhaust gas also passes through the second exhaust fluid mixing conduit and the second selective catalytic reduction unit.

The first aftertreatment unit may further comprise an exhaust fluid injector. For example, the exhaust fluid mixing conduit of the first aftertreatment unit may comprise the exhaust fluid injector. The exhaust fluid injector may be configured to inject an exhaust fluid upstream of the exhaust fluid mixing conduit such that, in use, the first portion of exhaust gas mixes with injected exhaust fluid to produce the exhaust gas mixed with exhaust fluid. In arrangements where the first aftertreatment unit comprises the first exhaust fluid mixing conduit and the second aftertreatment unit comprises the second exhaust fluid mixing conduit, the first exhaust fluid mixing conduit may comprise a first exhaust fluid injector and the second exhaust fluid mixing conduit may comprise a second exhaust fluid injector. The first and second exhaust fluid injector may be configured similarly to the exhaust fluid injector described above.

As shown in Figure 1, the engine assembly may further comprise an exhaust gas recirculation unit 170. The exhaust gas recirculation unit 170 comprises an exhaust gas recirculation path from downstream of the combustion chamber 110 to upstream of the combustion chamber 110. For example, as shown in Figure 1, the exhaust gas recirculation path is from a secondary outlet 122 of the exhaust gas manifold 122 to a combustion chamber inlet 114. By providing the exhaust gas recirculation unit 170, a second portion of exhaust gas from the combustion chamber 110 may be re-supplied to the combustion chamber 110. This may have the effect of transferring thermal energy back to the combustion chamber, which may speed up the process of the combustion chamber warming up to temperature when first in use. The exhaust gas recirculation unit 170 may also increase fuel efficiency by re-supplying to the combustion chamber 110 fuel which may have arrived at the exhaust gas manifold 120 having not combusted in a previous combustion stroke.

The exhaust gas recirculation unit 170 may comprise an exhaust gas recirculation valve 171. As shown in Figure 1, the exhaust gas recirculation valve 171 may be located within the exhaust gas recirculation path. The exhaust gas recirculation valve 171 may be configured to control a flow rate of the second portion of exhaust gas to the combustion chamber 110. For example, by opening the exhaust gas recirculation valve 171, the exhaust gas from the exhaust gas manifold 120 may be re-supplied to the combustion chamber 110. Therefore, by opening the exhaust gas recirculation valve 171 the flow rate of the second portion of exhaust gas to the combustion chamber 110 may increase. By closing the exhaust gas recirculation valve 171, pressure within the exhaust gas manifold 120 and the combustion chamber 110 may be increased. Therefore, by closing the exhaust gas recirculation valve 171 the flow rate of the second portion of exhaust gas to the combustion chamber 110 may decrease.

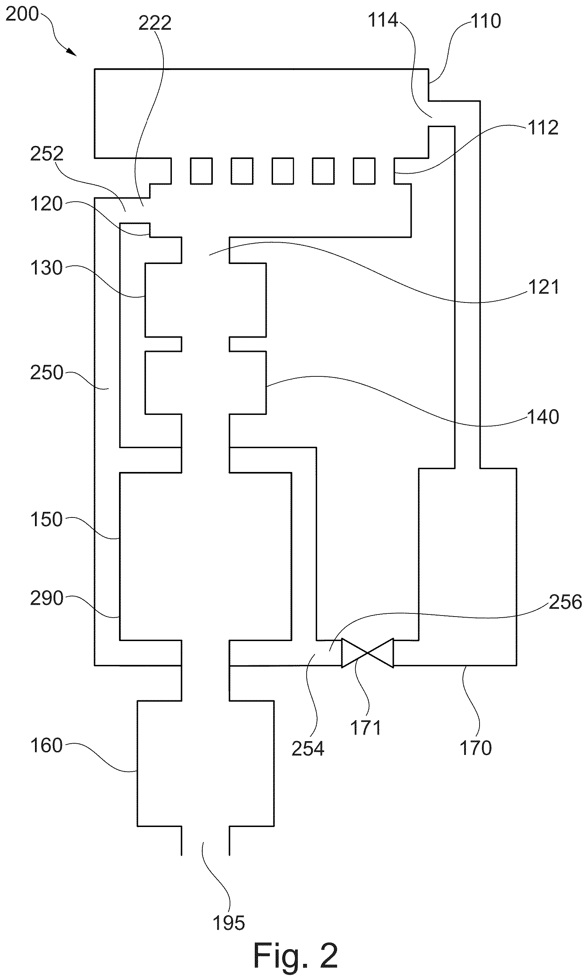

Figure 2 shows a first embodiment of the engine assembly 200 in accordance with the disclosure. The engine assembly 200 of the first embodiment shown in Figure 2 is similar to the engine assembly 100 of the prior art described with reference to Figure 1, except that the engine assembly 200 of the first embodiment further comprises a bypass conduit 250.

As shown in Figure 2, the bypass conduit 250 may extend from an inlet 252 to an outlet 254. The inlet 252 may be configured to receive the second portion of exhaust gas from the combustion chamber 110. For example, as shown in Figure 2, the inlet 252 is configured to receive the second portion of exhaust gas from the secondary outlet 222 of the exhaust gas manifold 110. Therefore, the secondary outlet 222 may be configured to supply the inlet 252 of the bypass conduit 250. In Figure 2, the inlet 252 is configured to receive the second portion of exhaust gas from the combustion chamber 110 via the exhaust gas manifold 120.

The outlet 254 is configured to supply the second portion of exhaust gas to a bypass re-entry point 256. For example, as shown in Figure 2, the bypass re-entry point 256 may comprise an inlet of the exhaust gas re-circulation circuit 170. Therefore, the bypass re-entry point 256 may be located in the recirculation path of the exhaust gas re-circulation circuit 170.

The bypass re-entry point 256 is located upstream of the second aftertreatment unit 160. For example, as shown in Figure 2, the bypass re-entry point 256, which comprises the inlet of the exhaust gas re-circulation circuit 170 is upstream of the combustion chamber 110, which in turn is upstream of the second aftertreatment unit 160. In alternative arrangements, not shown in Figure 2, the bypass re-entry point 256 may be at any location upstream of the second aftertreatment unit 160, which includes upstream of the combustion chamber 110, upstream of the exhaust gas manifold 120, upstream of the turbocharger 130, upstream of the backpressure valve 140, upstream of the first aftertreatment unit, and/or directly upstream of the second aftertreatment unit 160. By providing the bypass re-entry point 256 upstream of the second aftertreatment unit 160, the second portion of exhaust gas is treated by the second aftertreatment unit 160.

Also different to the prior art engine assembly 100 of Figure 1, the engine assembly 200 in accordance with the disclosure further comprises a thermal transfer interface 290, as shown in Figure 2. The thermal transfer interface 290 forms a boundary between the bypass conduit 250 and the first aftertreatment unit 150. For example, as shown in Figure 2, the bypass conduit 250 may surround the first aftertreatment unit 150. In this way, thermal energy may be transferred from the second portion of exhaust gas (within the bypass conduit 250) to the first portion of exhaust gas (within the first aftertreatment unit 150). By transferring thermal energy in this way, the efficiency of treatment of the first portion of exhaust gas through the first aftertreatment unit 150 is increased. In some arrangements the first aftertreatment unit 150 may have a cylindrical form and the bypass conduit may surround the cylindrical form in an annular fashion, or similar.

As explained above, the first aftertreatment unit 150 comprises the exhaust fluid mixing conduit. Therefore, the bypass conduit 250 may surround the exhaust fluid mixing conduit. The thermal transfer interface 290 may comprise a wall of the exhaust fluid mixing conduit. The wall may comprise a thermally conductive material. The wall, in use, may be in contact with (e.g. on a first side of the wall) the first portion of exhaust gas through the exhaust fluid mixing conduit. The wall, in use, may be in contact with (e.g. on a second side of the wall, opposite the first side) the second portion of exhaust gas through the bypass conduit 250. In some arrangements, the bypass conduit 250 may comprise an outer insulating surface surrounding the thermal transfer interface 290, the outer insulating surface being configured to prevent or decrease thermal energy from being released from the bypass conduit 250 other than to the first aftertreatment unit 150. As such, the outer insulating surface may increase a quantity of thermal energy which is directed to the first aftertreatment unit 150 via the bypass conduit 250.

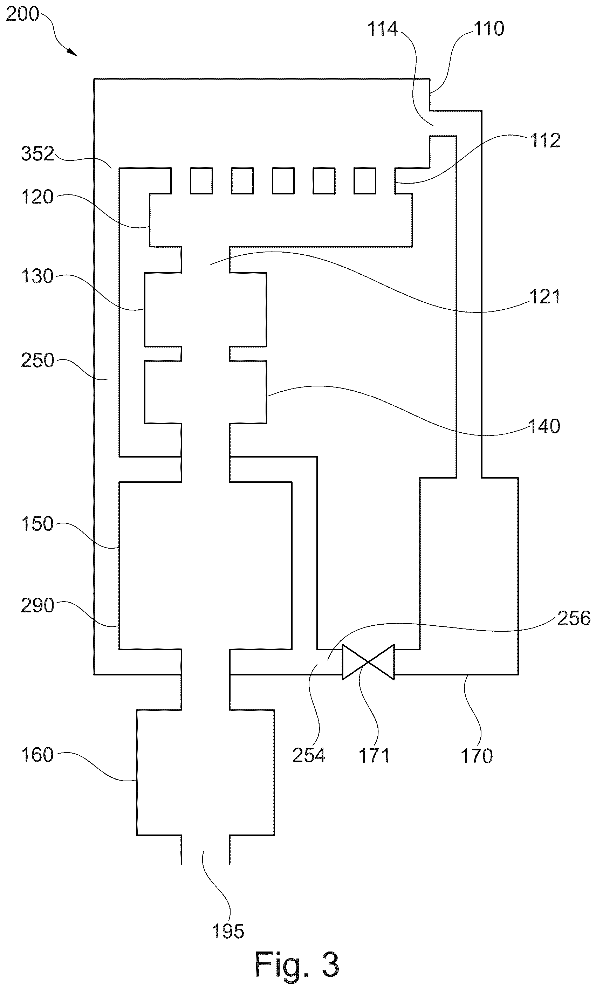

Figure 3 shows a second embodiment of the engine assembly 200. The second embodiment of the engine assembly 200 shown in Figure 3 is similar to the first embodiment of the engine assembly 200 shown in Figure 2, except that in the second embodiment, the inlet 352 of the bypass conduit 250 is configured to receive the second portion of exhaust gas directly from the combustion chamber 110, rather than from the exhaust gas manifold 120. In this way, the thermal energy of the first portion of exhaust gas may be increased.

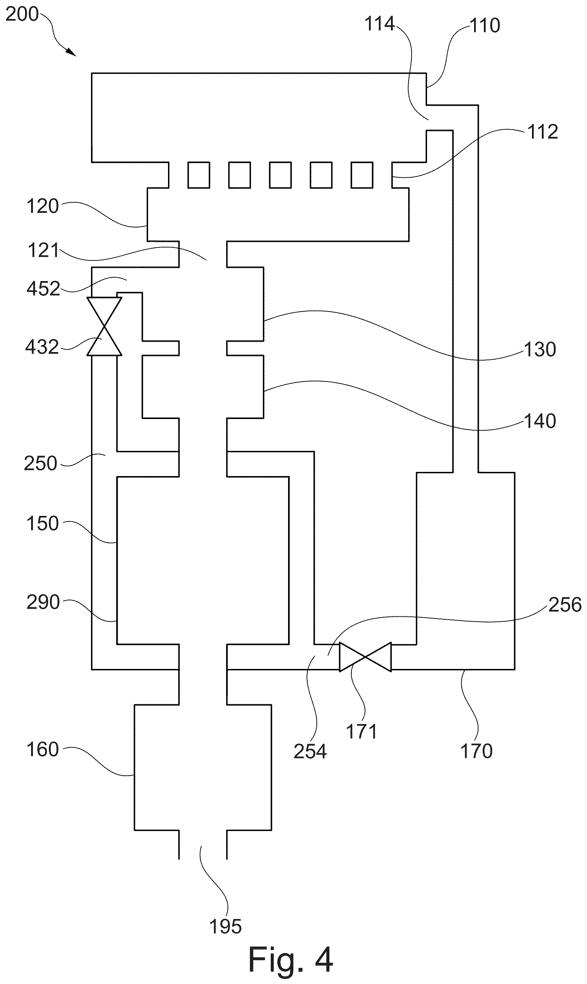

Figure 4 shows a third embodiment of the engine assembly 200. The third embodiment of the engine assembly 200 shown in Figure 4 is similar to the first and second embodiments of the engine assembly 200 shown in Figure 2 and Figure 3 respectively, except that in the third embodiment, the inlet 452 of the bypass conduit 250 is configured to receive the second portion of exhaust gas from the turbocharger 130. As shown in Figure 4, the bypass conduit 250 may further comprise a turbocharger waste gate valve 432. The turbocharger waste gate valve may be configured to control a flow rate of the second portion of exhaust gas from the turbocharger 130.

For example, by opening the turbocharger waste gate valve 432, the exhaust gas from the turbocharger 130 may be supplied to the bypass conduit 250. Therefore, by opening the turbocharger waste gate valve 432 the flow rate of the second portion of exhaust gas to the bypass conduit 250 may increase. Correspondingly, by opening the turbocharger waste gate valve 432, the flow rate of the first portion of exhaust gas may decrease. By closing the turbocharger waste gate valve 432, the flow rate of the second portion of exhaust gas to the bypass conduit 250 may decrease. Correspondingly, by closing the turbocharger waste gate valve 432, the flow rate of the first portion of exhaust gas may increase. In this way, the flow rate of the second portion of exhaust gas to the bypass conduit 250, and the flow rate of the first portion of exhaust gas through the turbocharger 130 may be controlled.

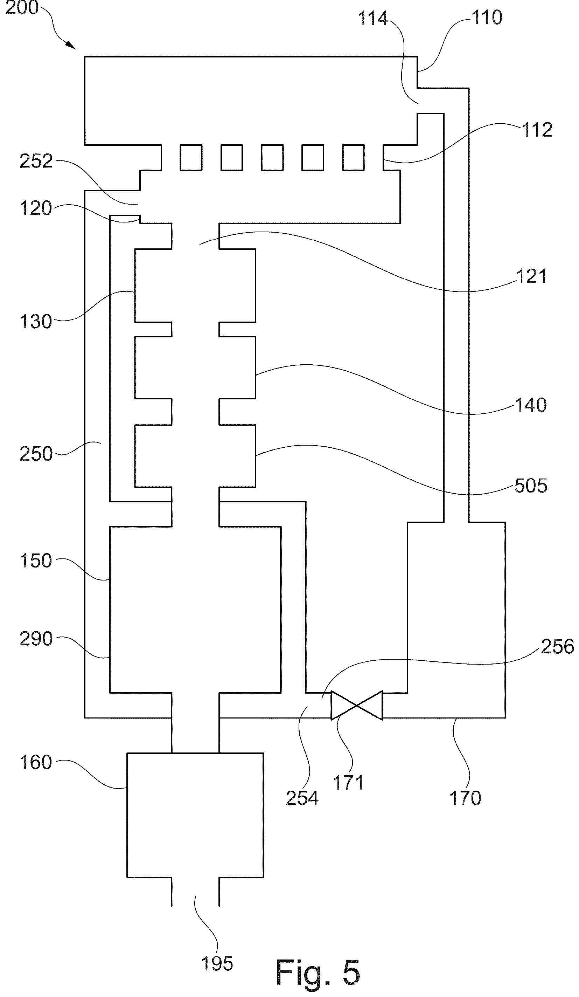

Figure 5 shows a fourth embodiment of the engine assembly 200. The fourth embodiment of the engine assembly 200 shown in Figure 5 is similar to the first embodiment of the engine assembly 200 shown in Figure 2, except that in the fifth embodiment, the engine assembly 200 further comprises a third aftertreatment system 505. The third aftertreatment system 505 may comprise a diesel oxidation catalyst (DOC). Alternatively, or additionally, the third aftertreatment system 505 may comprise a diesel particulate filter (DPF). As shown in Figure 5, the third aftertreatment system 505 may be upstream of the first aftertreatment system 150.

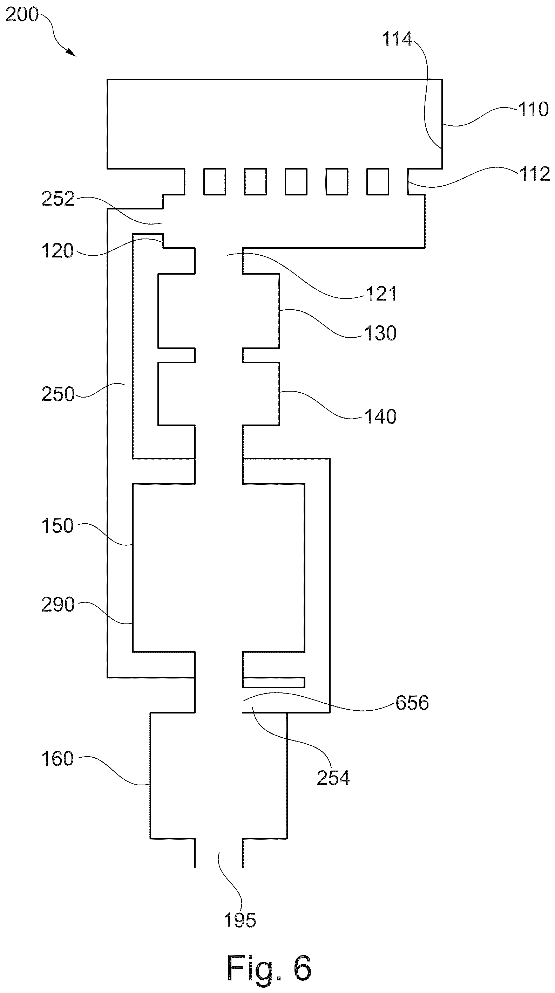

In the first to fourth embodiments (Figures 2 to 5), the engine assembly 200 comprises the exhaust gas recirculation unit 170. In fifth to eighth embodiments (Figures 6 to 9), the engine assembly 200 may comprise the exhaust gas recirculation unit 170, but the exhaust gas re-circulation unit 170 is not shown in Figures 6 to 9. Also, in the first to fourth embodiments (Figures 2 to 5), the bypass re-entry point 256 is located upstream of the combustion chamber 110. In the fifth to eighth embodiments (Figures 6 to 9), the bypass re-entry point 656 is located downstream of the combustion chamber 110, and downstream of the first aftertreatment system 150. In the fifth to eighth embodiments (Figures 6 to 9), the bypass re-entry point 656 is located downstream of the first aftertreatment system 150 and upstream of the second aftertreatment system 160.

Figure 6 shows the fifth embodiment of the engine assembly 200. The fifth embodiment of the engine assembly 200 shown in Figure 6 is similar to the first embodiment of the engine assembly 200 shown in Figure 2, except that the bypass re-entry point 656 of the fifth embodiment is located downstream of the combustion chamber 110. Specifically, the bypass re-entry point 656 is located downstream of the first aftertreatment system 150. Also, in the fifth embodiment, the bypass re-entry point 656 is located upstream of the second aftertreatment system 160.

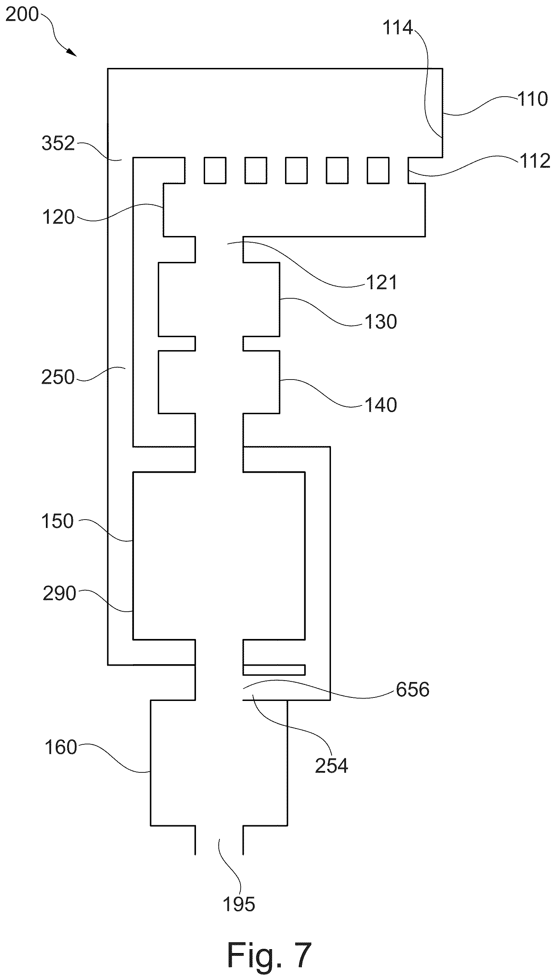

Figure 7 shows the sixth embodiment of the engine assembly 200. The sixth embodiment of the engine assembly 200 shown in Figure 7 is similar to the second embodiment of the engine assembly 200 shown in Figure 3, except that the bypass re-entry point 656 of the sixth embodiment is located downstream of the combustion chamber 110. Specifically, the bypass re-entry point 656 is located downstream of the first aftertreatment system 150. Also, in the sixth embodiment, the bypass re-entry point 656 is located upstream of the second aftertreatment system 160.

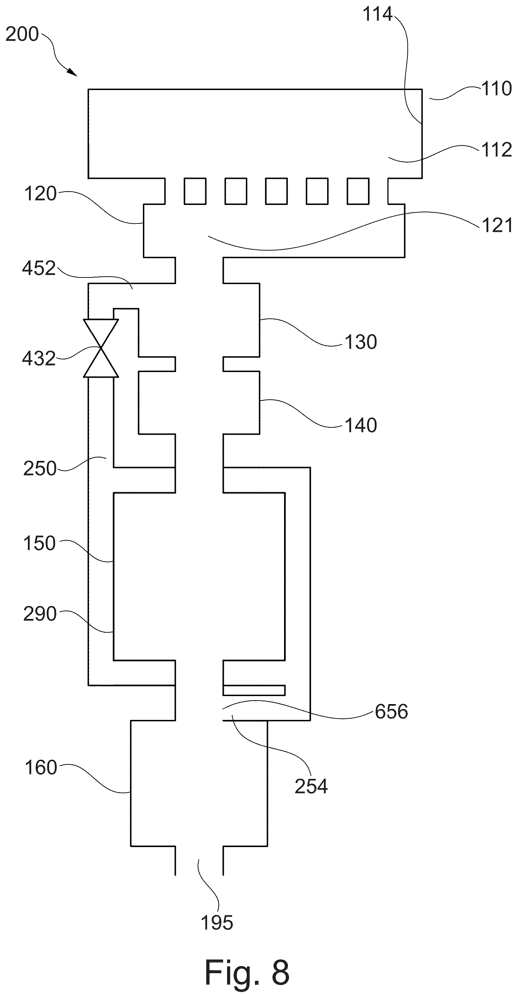

Figure 8 shows the seventh embodiment of the engine assembly 200. The seventh embodiment of the engine assembly 200 shown in Figure 8 is similar to the third embodiment of the engine assembly 200 shown in Figure 4, except that the bypass re-entry point 656 of the seventh embodiment is located downstream of the combustion chamber 110. Specifically, the bypass re-entry point 656 is located downstream of the first aftertreatment system 150. Also, in the seventh embodiment, the bypass re-entry point 656 is located upstream of the second aftertreatment system 160.

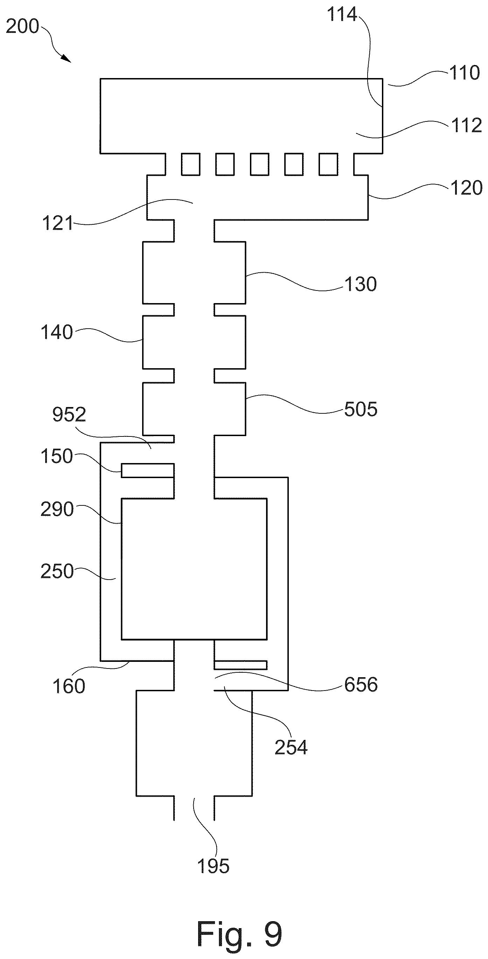

Figure 9 shows the eighth embodiment of the engine assembly 200. The eighth embodiment of the engine assembly 200 shown in Figure 9 is similar to the fourth embodiment of the engine assembly 200 shown in Figure 5, except that the bypass re-entry point 656 of the eighth embodiment is located downstream of the combustion chamber 110. Specifically, the bypass re-entry point 656 is located downstream of the first aftertreatment system 150. Also, in the eighth embodiment, the bypass re-entry point 656 is located upstream of the second aftertreatment system 160.

In the fifth, sixth, and eighth embodiments, the engine assembly 200 may further comprise a control valve (not shown in Figures 6, 7, and 9). The control valve may be located downstream of the inlet 252, 352, 952 of the bypass conduit 250 and upstream of the bypass re-entry point 656. The control valve may control the flow rate of the second portion of exhaust gas. For example, by opening the exhaust gas control valve, the flow rate of the second portion of exhaust gas may be increased. By closing the control valve, the flow rate of the second portion of exhaust gas may be decreased.

In any of the above embodiments, the combustion chamber 110 may comprise a diesel combustion chamber. The skilled person would readily appreciate that various aspects of the embodiments described above may be substituted with aspects of others of the embodiments described above without departing from the scope of the claims.

## Claims

1. An engine assembly comprising:
a combustion chamber;
a first aftertreatment unit configured to receive a first portion of exhaust gas from the combustion chamber, the first aftertreatment unit comprising an exhaust fluid mixing conduit configured to facilitate mixing of exhaust gas with an exhaust fluid to produce exhaust gas mixed with exhaust fluid;
a second aftertreatment unit configured to receive from the first aftertreatment unit the exhaust gas mixed with exhaust fluid, the second aftertreatment unit comprising a selective catalytic reduction unit;
a bypass conduit having an inlet configured to receive a second portion of exhaust gas from the combustion chamber, and an outlet configured to supply the second portion of exhaust gas to a bypass re-entry point of the engine assembly located upstream of the second aftertreatment unit; and
a thermal transfer interface between the bypass conduit and the first aftertreatment unit to facilitate thermal transfer between the bypass conduit and the first aftertreatment unit.

2. The engine assembly of claim 1, wherein:
the bypass conduit surrounds the first aftertreatment unit.

3. The engine assembly of claim 2, wherein:
the thermal transfer interface comprises a wall of the exhaust fluid mixing conduit, wherein the wall, in use, is in contact with the first portion of exhaust gas through the exhaust fluid mixing conduit.

4. The engine assembly of any of claims 1 to 3, wherein: the first aftertreatment unit further comprises an exhaust fluid injector configured to inject an exhaust fluid upstream of the exhaust fluid mixing conduit such that, in use, the first portion of exhaust gas mixes with injected exhaust fluid to produce the exhaust gas mixed with exhaust fluid.

5. The engine assembly of any preceding claim, wherein:
the bypass re-entry point is located upstream of the combustion chamber.

6. The engine assembly of any of claims 1 to 5 further comprising an exhaust gas recirculation unit comprising a recirculation path from downstream of the combustion chamber to upstream of the combustion chamber, wherein:
the bypass re-entry point is located in the recirculation path;
and wherein optionally:
the exhaust gas recirculation unit comprises an exhaust gas recirculation valve located within the recirculation path and configured to control a flow rate of the second portion of exhaust gas to the combustion chamber.

7. The engine assembly of any of claims 1 to 5, wherein:
the bypass re-entry point is located downstream of the first aftertreatment unit and upstream of the second aftertreatment unit.

8. The engine assembly of any preceding claim, wherein:
the exhaust fluid mixing conduit of the first aftertreatment unit is a first exhaust fluid mixing conduit, and the second aftertreatment unit further comprises a second exhaust fluid mixing conduit.

9. The engine assembly of any preceding claim, wherein:
the selective catalytic reduction unit of the second aftertreatment system is a first selective catalytic reduction unit, and the first aftertreatment system comprises a second selective catalytic reduction unit.

10. The engine assembly of any preceding claim: further comprising:
an exhaust gas manifold configured to receive exhaust gas from the combustion chamber, the exhaust gas manifold comprising a primary outlet wherein the primary outlet is configured to supply the first aftertreatment unit;
and wherein optionally:
the exhaust gas manifold comprises a secondary outlet wherein the secondary outlet is configured to supply the inlet of the bypass conduit.

11. The engine assembly of claim 10, wherein:
the inlet of the bypass conduit is configured to receive the second portion of exhaust gas directly from the combustion chamber.

12. The engine assembly of claim 10 or claim 11, further comprising:
a turbocharger, between the combustion chamber and the first aftertreatment unit, the turbocharger being configured to receive the exhaust gas flow from the combustion chamber.

13. The engine assembly of claim 12, wherein:
the inlet of the bypass conduit is configured to receive the second portion of exhaust gas from the turbocharger.

14. The engine assembly of claim 12 or 13 wherein:
the bypass conduit further comprises a turbocharger waste gate valve configured to control a flow rate of the second portion of exhaust gas from the turbocharger.

15. The engine assembly of any of claims 12 to 14 further comprising:
a backpressure valve between the turbocharger and the first aftertreatment unit.
